(19) Europäisches Patentamt European Patent Office Office européen des brevets

(11) **EP 3 383 177 B1**

(12) **EUROPEAN PATENT SPECIFICATION**

(45) Date of publication and mention of the grant of the patent:
**22.04.2026 Bulletin 2026/17**

(21) Application number: **16791609.7**

(22) Date of filing: **08.11.2016**

(51) International Patent Classification (IPC):
*A01N 37/02* (2006.01)   *A01N 37/06* (2006.01)
*A01N 59/16* (2006.01)   *A01N 59/20* (2006.01)
*A01N 37/38* (2006.01)

(52) Cooperative Patent Classification (CPC):
(C-Sets available)
**A01N 59/20; A01N 37/02; A01N 37/06;
A01N 37/38; A01N 59/16**              (Cont.)

(86) International application number:
**PCT/EP2016/076975**

(87) International publication number:
**WO 2017/092978 (08.06.2017 Gazette 2017/23)**

(54) **COMPOSITION FOR CROP CARE AND PROTECTION**

ZUSAMMENSETZUNG FÜR PFLEGE UND SCHUTZ VON PFLANZEN

COMPOSITION POUR LE SOIN ET LA PROTECTION DES CULTURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA MD**

(30) Priority: **04.12.2015 IT UB20156248**

(43) Date of publication of application:
**10.10.2018 Bulletin 2018/41**

(73) Proprietor: **Alpha Biopesticides Limited
Cambridge, Cambridgeshire CB4 0WS (GB)**

(72) Inventors:
• **LEONARDI, Giuliano
26031 Isola Dovarese (CR) (IT)**
• **VECCHI, Alfeo
Cambridge
Cambridgeshire CB4 0WS (GB)**

(74) Representative: **Villa, Livia
ADV IP S.r.l.
Corso di Porta Vittoria 29
20122 Milano (IT)**

(56) References cited:
WO-A1-01/22822          WO-A1-2005/094580
WO-A1-2011/038747       WO-A1-2014/180640
WO-A1-2015/018606       WO-A1-2015/177710
WO-A1-2017/067852       WO-A1-91/13552

• ANONYMOUS: "Ricinus - Wikipedia", 23 June
2020 (2020-06-23), XP55710174, Retrieved from
the Internet <URL:https://en.wikipedia.org/wiki/
Ricinus> [retrieved on 20200630]
• ANONYMOUS: "Hemp oil - Wikipedia, the free
encyclopedia", WIKIPEDIA, 29 March 2016
(2016-03-29), XP055263705, Retrieved from the
Internet <URL:https://en.wikipedia.org/wiki/
Hemp_oil> [retrieved on 20160408]

EP 3 383 177 B1

(52) Cooperative Patent Classification (CPC): (Cont.)

C-Sets
**A01N 37/02, A01N 59/16, A01N 59/20;**
**A01N 37/06, A01N 59/16, A01N 59/20;**
**A01N 37/38, A01N 59/16, A01N 59/20**

**Description**

TECHNICAL FIELD

The present invention concerns crop defence composition comprising a copper compound and a $C_{16}$-$C_{20}$ fatty acids salts of lithium, sodium, potassium, magnesium, calcium, or a mixture thereof, as well as uses for protecting crop against fungi, oomycetes and bacteria.

BACKGROUND OF THE RELATED ART

Fungi and bacteria can cause substantial damages to crops with significant losses in quality and quantity.

The fungicides formulations are used in the control of fungi, oomycetes and bacteria in agriculture.

The fungicides are of great importance in agriculture although there are strong concerns in the use of plant protection products, on human health and environmental impact. Therefore, there is a great effort in the research of new agrochemicals formulations having reduced risk on health and environment.

In agriculture, metal-based compounds, such as copper-based compounds, are used on preparations of fungicidal and bactericidal formulations; particularly, copper-based compounds show a broad-spectrum fungicide, oomycocide and bactericide, so that there are many benefits on uses of copper formulations.

However, it should be noted that, while copper exposure is not perceived as a human health concern although copper is a heavy metal, there are indeed concerns on the effects on environment, ecotoxicology, aquatic organism and non target-organisms. Copper compounds are entered in some IPM (Integrated Pest Management) programs to be used in alternation with systemic fungicides that can have the risk of developing resistant strains of pathogens.

In this regard, EFSA (European Food Safety Authority) recently noted that the weight of evidence approach was considered acceptable for an application rate up to 4.5 kg Cu/ha per year (EFSA Journal 2013;11(6):3235, CONCLUSION ON PESTICIDE PEER REVIEW - Conclusion on the peer review of the pesticide risk assessment of confirmatory data submitted for the active substance copper (I), copper (II) variants namely copper hydroxide, copper oxychloride, tribasic copper sulfate, copper (I) oxide, Bordeaux mixture).

Similar concerns are known for other heavy metals, such as bismuth (Bi), chromium (Cr), zinc (Zn), cadmium (Cd), and nickel (Ni) (Chibuike G. U. et al., "Heavy Metal Polluted Soils: Effect on Plants and Bioremediation Methods", Applied and Environmental Soil Science, Vol. 2014 (2014), ID 752708).

WO9113552 describes a fungicidal treatment for plants that comprises citric or malic acid, palmitic or oleic acid and eventually sugars, together with a compound that is a metal chelate of copper. The complex can be with ammonia molecules as ligands, but also it can be a polydentate complex. Many formulations are prepared starting from cupric tetra amine sulfate and comprise palmitic acid. Wheat rust is treated.

It is therefore an object of the present invention to provide a product for plants care and protection, which allows reducing the overall amount of metal, thus resulting in a more eco-friendly product, without reducing the fungicide, oomycocide and bactericide effectiveness.

SUMMARY OF THE INVENTION

The above object has been achieved by a crop defence composition comprising a copper compound and a $C_{16}$-$C_{20}$ fatty acid salt of lithium, sodium, potassium, magnesium, calcium or a mixture thereof, as claimed in claim 1. The term "crop" denotes a plant or a plant product that can be grown and harvested extensively for profit or subsistence, thus including cereals, vegetables, fruits, and flowers.

In a further aspect, the present invention concerns the use of the crop defence composition for protecting crop against fungi, oomycetes and bacteria.

In this regard, the present invention also concerns a method of protecting crop against fungi, oomycetes and bacteria, said method comprising the steps of:

i) providing the crop defence composition,
ii) diluting the composition in water to obtain a diluted solution,
iii) applying the diluted solution to crop.

In an additional aspect, the present invention concerns an agro-chemical product comprising the crop defence composition, and agro-chemical additives.

In another aspect, the present invention concerns a process of preparing the crop defence composition.

## EP 3 383 177 B1

DESCRIPTION OF THE DRAWINGS

The characteristics and the advantages of the present invention will become apparent from the following detailed description, from the working examples provided for illustrative purposes, and from the annexed Figures wherein:

- Fig. 1 shows a phytotoxicity test on young plants of *Brassica oleracea* 12 days after sowing and treated with the composition of Example 1 (left rows of the white sowing basement) and treated with a copper salicylate solution (right rows of the white sowing basement);
- Fig. 2 shows a phytotoxicity test on young plants of *Brassica oleracea* 12 days after sowing and treated with the composition of Example 1 (left rows of the white sowing basement) and treated with an iron salicylate solution (right rows of the white sowing basement);
- Fig. 3 shows the pest incidence on leaves of grape of the composition of Example 1 at different concentration, compared with a first commercial product;
- Fig. 4 shows the pest incidence on bunch of grape of the composition of Example 1 at different concentration, compared with a first commercial product;
- Fig. 5 shows the pest incidence on leaves of grape of the composition of Example 1 at different concentration, compared with a second commercial product;
- Fig. 6 shows the pest incidence on bunch of grape of the composition of Example 1 at different concentration, compared with a second commercial product; and
- Fig. 7 shows the pest incidence on leaves of tomatoes of the composition of Example 1 at different concentration, compared with the first commercial product.

DETAILED DESCRIPTION OF THE INVENTION

The subject of the invention therefore is a crop defence composition comprising at least a metal compound and a $C_{16}$-$C_{20}$ fatty acid salt of lithium, sodium, potassium, magnesium, calcium or a mixture thereof, wherein said metal compound has formula $M_xA_y$, where M is copper A is a complexing agent, a counter ion or a combination thereof, x is an integer of 1 to 3 and y is an integer of 1 to 6, and, when A is a complexing agent, said complexing agent is thiosalicylic acid, ascorbic acid, alanine, phenylalanine, glycine, isoleucine, leucine, proline, valine, glycolic acid, lactic acid, malic acid, tartaric acid, citric acid, mandelic acid, 2-hydroxy-4-methylthio butanoic acid, anthranilic acid, benzoic acid, salicylic acid, 3,5-dihydroxybenzoic acid, 2,4-dihydroxybenzoic acid, 2,6-dihydroxybenzoic acid, gallic acid, benzenesulphonic acid, naphthalenesulphonic acid, dipicolinic acid, phenylacetic acid, 1-naphthylacetic acid, nicotinic acid, nicotinamide, sulphanilic acid, sulphosalicylic acid, 4-methylsalicilyc acid, 5-methylsalicilyc acid, 4,5-dimethylsalicilyc acid, ethyl salicylate, salicyl anilide, salicylaldehyde, salicylaldoxime, salicylhydroxamic acid, 4-acetamidosalicylic acid, salicyluric acid or a mixture thereof, and when A is a counter ion, said counter ion is $OH^-$, oxygen, halogen, sulphate, gluconate, oxychloride, or a combination thereof.

It has been found that this composition shows a good effectiveness against fungi, oomycetes and bacteria surprisingly even at very reduced concentration, i.e. at a total quantity lower than 3000 grams Metal/ha per year, preferably lower than 1000 grams Metal/ha per year, more preferably a total quantity of 300-500 grams Metal/ha per year. Moreover, the composition has a good stability over time, high water suspensibility, as well as a good grip on crop surfaces, such as leaves and trunk surfaces, once applied thereon.

These advantages are ascribable to the synergy surprisingly observed between the copper compound and the potassium oleate. Said synergy is even more unexpected and surprising in view of the following aspects.

Firstly, the addition of a metal to a water solution of a derivative of fatty acid typically results in the formation of a salt of said fatty acid with the metal, said resulting salt being water insoluble or very poorly soluble (W. F. Whitmore et al., Jun 1930 "Metallic Soaps-Their Uses, Preparation, and Properties" Industrial And Engineering Chemistry Vol. 22, No. 6): this means that the reaction product is no longer active and usable.

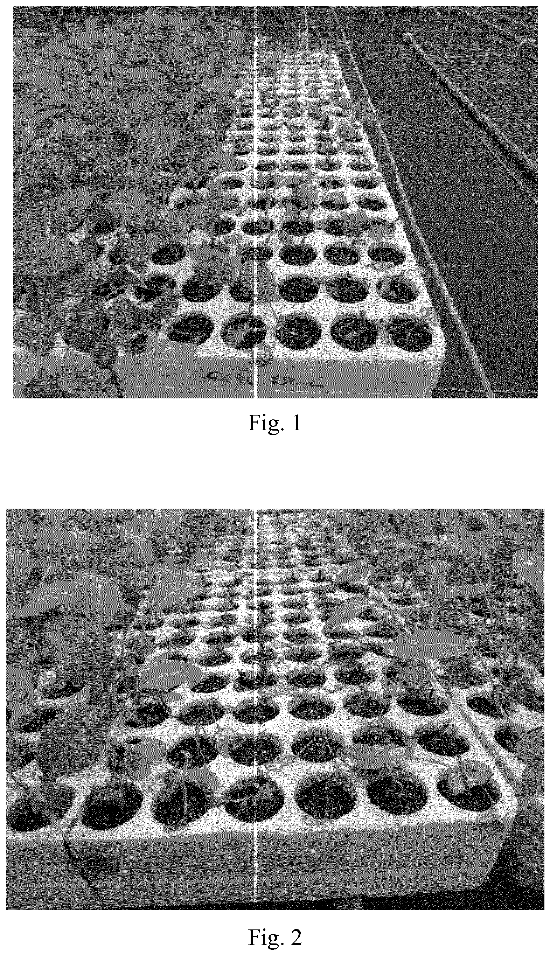

Secondly, some metal compounds and complexes show an undesirable phytotoxicity, at some level of concentration, so that the same cannot be considered further in a formulation devoted to the care and protection of plants. In this regard, in Fig. 1 and Fig. 2, phytotoxicity tests on young plants of *Brassica oleracea* treated with copper and iron salicylate salts respectively, clearly show the severe phytotoxicity of these compounds as such.

Thirdly, in some cases such as copper, the metal exerts a prooxidant activity towards the double bonds of the fatty acid chains.

Therefore, the crop defence composition, not only show a greatly improved effectiveness, but also overcome all these technical problems and prejudices by identifying a suitable combination under many aspects, such as stability of the metal compounds with respect to the formation of insoluble salts. This means that the copper compounds of the compositions of the invention do not react with the derivative of fatty acid, so that the formation and precipitation of insoluble salts advantageously does not occur. In this regard, in the crop defence composition of the invention, preferably,

the amount of $C_{16}$-$C_{20}$ fatty acid salt stoichiometrically exceeds the amount of metal compound.

At the same time, the prooxidant action of the metal itself is prevented, again in view of the stability of the metal complexes.

Moreover, the metal compounds prevent the derivative of fatty acids from getting rancid over time.

Additionally, it has been found that the compositions of the invention show a reduced phytotoxicity, whereas some metal compounds as such are known to be unacceptably phytotoxic, so that it is now possible to take benefit of the fungicidal and antimicrobial action of the metal compounds, e.g. copper complexes, in the crop defence applications. Moreover, as said above, the composition of the invention is highly water suspensible, owing to the hydrophilic nature of the components.

Preferably, the crop defence composition is a transparent solution having no sediments. Preferably, the crop defence composition has a density of 0.80-1.50 g/ml, more preferably, 1.00-1.20 g/ml.

Copper compounds suitable for the purposes of the invention can be commercially available products or can be synthesized according to processes known in the art, such as those described in the following scientific publications:

- R. J. Shennan et al. "Anthranilic acid and its use in the determination of zinc, cadmium, cobalt, nickel and copper", Analyst, 1936,61, 395-400
- D. J. C. Gomes et al., "Synthesis, characterization and thermal study of solid mandelate of some bivalent transition metal ions in CO2 and N2 atmospheres", Journal of Thermal Analysis and Calorimetry, January 2013, Volume 111, Issue 1, pp 57-62
- D. R. Satriana, "Preparation of analytically pure monobasic copper salicylate", from U. S. Nat. Tech. Inform. Serv., AD Rep. (1971), (No. 732352), 27 pp.

In preferred embodiments, the stoichiometric ratio between the metal M and the $C_{16}$-$C_{20}$ fatty acid salt is 1:20 to 1:35, preferably 1:25 to 1:30.

In other embodiments, the $C_{16}$-$C_{20}$ fatty acid salt is in an amount up to 95wt% on the weight of the composition, preferably 75-90wt%.

In other embodiments, the metal compound is in an amount up to 5wt% on the weight of the composition, preferably 1-4wt%.

In other preferred embodiments, the $C_{16}$-$C_{20}$ fatty acid salt is in an amount of 75-85wt% on the weight of the composition, and the metal compound is in an amount 2-4wt% on the weight of the composition.

In other embodiments, the $C_{16}$-$C_{20}$ fatty acid salt is in an amount higher than the metal compound. Preferably, the metal compound and the $C_{16}$-$C_{20}$ fatty acid salt are in a weight ratio of 1:2 to 1:10, more preferably, 1:3 to 1:6.

In the crop defence composition, when A is a counter ion, the resulting metal compound is a metal hydroxide, metal oxide, metal halide, metal sulphate, metal gluconate, metal oxychloride, or a combination thereof.

In preferred embodiments, when A is a counter ion, said counter ion is OH$^-$, halogen, sulphate, gluconate, oxychloride, or a combination thereof, so that the resulting metal compound is a metal hydroxide, metal halide, metal sulphate, metal gluconate, metal oxychloride, or a combination thereof.

In the crop defence composition, when A is a complexing agent, the resulting metal compound is a metal complex. Said metal complex can be anionic, neutral or cationic. Preferably, said complexing agent is salicylic acid, mandelic acid, anthranilic acid, 2,6-dihydroxybenzoic acid, benzenesulphonic acid, or a mixture thereof.

The metal M is copper.

A preferred metal complex is copper mandelate, copper salicylate, copper anthranilate, copper 2,6-dihydroxybenzoate, copper benzenesulphonate, mixture thereof.

Said fatty acids are preferably naturally occurring fatty acid, such as those from plants and vegetables.

Preferably, the crop defence composition comprises a copper complex and a salt of $C_{16}$-$C_{20}$ fatty acid.

More preferably, said derivative of $C_{16}$-$C_{20}$ fatty acid is a derivative of linoleic acid (C18:2), $\gamma$-linolenic acid (C18:3), palmitoleic acid (C16:1), vaccenic acid (C18:1), paullinic acid (C20:1), oleic acid (C18:1), elaidic acid (Ctrans-18:1), or a mixture thereof.

In preferred embodiments, said derivative of $C_{16}$-$C_{20}$ fatty acid is a mixture comprising at least 70 wt% of a salt of oleic acid, on the weight of the salt of $C_{16}$-$C_{20}$ fatty acid.

In more preferred embodiments, said derivative of oleic acid is an alkali salt of oleic acid, preferably is potassium oleate.

The most preferred embodiments are those comprising a metal complex selected from the group consisting of copper mandelate, copper salicylate, copper anthranilate, copper 2,6-dihydroxybenzoate, copper benzenesulphonate, , and mixtures thereof, and a derivative of $C_{16}$-$C_{20}$ fatty acid, said derivative being a mixture comprising at least 70 wt% of potassium oleate, on the weight of the salt of $C_{16}$-$C_{20}$ fatty acid.

The composition can further comprise a solvent.

Suitable solvents are glycols, alcohols, polyalcohols, and combinations thereof. Preferred solvents are methanol, ethanol, n-propanol, iso-propanol, n-butanol, isobutanol, allyl alcohol, 1,2-propylene glycol, 1,3-propylene glycol, 1,2-ethylene glycol, polyethylene glycol (PEG), benzyl alcohol, glycerol, and mixtures thereof.

Particularly preferred are the crop defence compositions consisting of:

- 2-4 wt% of a metal complex selected from the group consisting of copper mandelate, copper salicylate, copper anthranilate, copper 2,6-dihydroxybenzoate, copper benzenesulphonate, and mixtures thereof,
- 75-85 wt% of a salt of oleic acid, and
- the remainder being a solvent.

In a further aspect, the present invention relates to the use of the crop defence composition as above described for protecting crop against fungi, oomycetes and bacteria.

Particularly, this composition has proved to be effective against bacteria, such as *Erwinia amylovora, Pseudomonas syringae p.v. actinidiae* (PSA), *Xanthomonas arboricola p.v. pruni, Xanthomonas campestris p.v. vescicatoria,* and pathogenic fungi, such as *Phytophthora infestans, Botrytis cinerea, Plasmopara viticola, Cercospora beticola, Zymoseptoria tritici.*

As stated above, the composition is effective even at very reduced amounts, i.e. at a total quantity lower than 3000 grams Metal/ha per year, preferably lower than 1000 grams Metal/ha per year, more preferably a total quantity of 300-500 grams Metal/ha per year. In other words, the solution is effective at very low concentrations, i.e. less than 10 g/100 l of water, whereas known copper products are used at concentrations of more than 140 g/100 l of water.

The invention therefore also concerns a method of protecting crop against fungi, oomycetes and bacteria, said method comprising the steps of:

i) providing a composition as above described,
ii) diluting the composition in water to obtain a diluted solution,
iii) applying the diluted solution to crop.

Preferably, the application of the solution to crop, in step iii), is performed by spraying the solution on crop, at different times during the development of the crop, according to the parameters of pathogen growth.

Preferably, the solution is applied at least once a year; more preferably, 2 to 6 times a year; even more preferably 3 times a year.

Preferably, in step i), the composition is provided at a metal concentration of 5 to 50 grams per liter.

In preferred embodiments of the method, the solution of step iii) is applied at a concentration lower than 3000 grams Metal/ha per year, preferably lower than 1000 grams Metal/ha per year, more preferably a total quantity of 300-500 grams Metal/ha per year.

Preferably, the solution is applied at least once a year; more preferably, 2 to 6 times a year; even more preferably 3 times a year. In this regard, the solution is applied at a concentration of 5 to 20 grams Metal/100 l $H_2O$ for each application.

In an additional aspect, the present invention also concerns an agro-chemical product comprising the crop defence composition, and agro-chemical additives.

Suitable additives are pH adjusters, acidity adjusters, water hardness adjusters, mineral oils, vegetal oils, fertilizers, leaf manures, and combinations thereof.

In view of the fact that the composition is effective even at very reduced concentrations, the agro-chemical product advantageously and preferably comprises the crop defence composition in an amount so as to have a metal concentration of 5 to 50 grams per liter of agro-chemical product.

In another aspect, the present invention relates to a process of preparing the crop defence composition as above described, said process comprising the steps of:

a) providing a copper compound and dissolving the metal compound in a solvent thus obtaining a solution,
b) adding said solution to a salt of lithium, sodium, potassium, magnesium, calcium of a $C_{16}$-$C_{20}$ fatty acid and
c) mixing until a crop defence composition in the form of a solution is achieved.

Suitable solvents are glycols, alcohols, polyalcohols, and combinations thereof.

Preferred solvents are methanol, ethanol, n-propanol, iso-propanol, n-butanol, isobutanol, allyl alcohol, 1,2-propylene glycol, 1,3-propylene glycol, 1,2-ethylene glycol, polyethylene glycol (PEG), benzyl alcohol, glycerol, and mixtures thereof.

The most preferred solvents are 1,2-propylene glycol, 1,3-propylene glycol, 1,2-ethylene glycol, polyethylene glycol (PEG), and mixtures thereof.

Preferably, in step a), the metal compound is dissolved in a solvent under stirring and at a temperature of 55-85°C.

Preferably, in step b) the salt of $C_{16}$-$C_{20}$ fatty acid is pre-heated at a temperature of 35-65°C.

It should be understood that all aspects identified as preferred and advantageous for the crop defence composition are to be deemed as similarly preferred and advantageous also for the process of preparation, the agro-chemical product, the uses of the same, and the method of protecting crop.

It should be also understood that all the combinations of preferred aspects of the crop defence composition of the invention, as well as of process of preparation, the agro-chemical product, the use and the method, as above reported, are to be deemed as hereby disclosed.

Below are working examples of the present invention provided for illustrative purposes.

EXAMPLES

**Example 1.**

A crop defence composition was prepared according to the present invention.

135 g of anhydrous copper salicylate were dissolved in 1 litre of 1,2-propylene glycol under stirring at 60-65°C until a solution is obtained. This solution has an intense green colour and is transparent. This solution has a long-term stability even at room temperature, and a density of 1.05 g/ml.

Potassium oleate is selected and warmed at 40-50°C under stirring.

The solution of copper salicylate and 1,2-propylene glycol, as previously prepared, is then added to warmed potassium oleate, still under stirring, until a proportion of 1 part of solution to 4 part of potassium oleate is achieved.

The resulting crop defence composition is a transparent dark green solution having no sediments, and density of 1.03 g/ml.

With the test CIPAC MT 36.1.1 in water std "D" 342 ppm, a full emulsion was obtained, thus demonstrating the high suspensibility of the composition in water.

**Example 2.**

A crop defence composition was prepared according to the present invention.

Anhydrous copper anthranilate was previously synthesized by reacting copper hydroxide and 2-aminobenzoic acid.

134 g of anhydrous copper anthranilate were then dissolved in 1 litre of benzyl alcohol under stirring at about 80°C until a solution is obtained. This solution has an intense blue colour and is transparent. This solution has a long-term stability even at room temperature, and a density of 1.06 g/ml.

Potassium oleate is selected and warmed at 50-60°C under stirring.

The solution of copper anthranilate and benzyl alcohol, as previously prepared, is then added to warmed potassium oleate, still under stirring, until a proportion of 1 part of solution to 4 part of potassium oleate is achieved.

The resulting crop defence composition is a transparent dark blue solution having no sediments, and density of 1.10 g/ml.

With the test CIPAC MT 36.1.1 in water std "D" 342 ppm, a full emulsion was obtained, thus demonstrating the high suspensibility of the composition in water.

**Example 3.**

A crop defence composition was prepared according to the present invention.

Anhydrous copper 2,6-dihydroxybenzoate was previously synthesized by reacting copper hydroxide and 2,6-dihydroxybenzoic acid.

150 g of anhydrous copper 2,6-dihydroxybenzoate were then dissolved in 1 litre of glycerol under stirring at 65-70°C until a solution is obtained. This solution has an intense green colour and is transparent. This solution has a long-term stability even at room temperature, and a density of 1.35 g/ml.

Potassium oleate is selected and warmed at 50-60°C under stirring.

The solution of copper 2,6-dihydroxybenzoate and glycerol, as previously prepared, is then added to warmed potassium oleate, still under stirring, until a proportion of 1 part of solution to 4 part of potassium oleate is achieved.

The resulting crop defence composition is a transparent dark green solution having no sediments, and density of 1.10 g/ml.

With the test CIPAC MT 36.1.1 in water std "D" 342 ppm, a full emulsion was obtained, thus demonstrating the high suspensibility of the composition in water.

**Example 4.**

The crop defence composition of Example 1, shortly referred to as "ABP590", has been tested in order to assess its properties.

Firstly, ABP590 has been tested on young plants of *Brassica oleracea* 12 days after sowing. This test aimed to assess the phytotoxicity of the composition of the invention, having a copper salicylate solution and an iron salicylate solution as comparative products. All the solutions were diluted at 0,2% in water before application on plants. Figures 1 and 2 show the results of these tests.

Fig. 1 shows that the copper salicylate solution (right rows of the white sowing basement) is highly phytotoxic, whereas the young plants of *Brassica oleracea* treated with the composition of Example 1 (left rows of the white sowing basement) thrive very well.

Fig. 2 shows that the iron salicylate solution (right rows of the white sowing basement) is even more phytotoxic than the copper salicylate solution, whereas the young plants of *Brassica oleracea* treated with the composition of Example 1 (left rows of the white sowing basement) thrive very well.

**Example 5.**

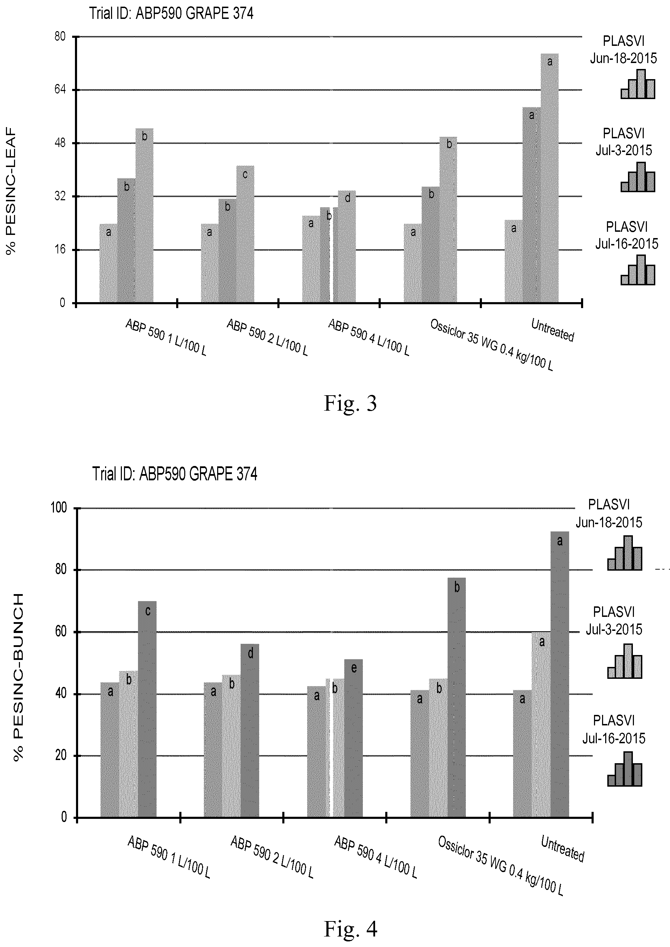

The pest incidence on leaves (Fig. 3) and on bunch (Fig. 4) of ABP590 has been tested in field trials on grape against downy mildew (*Plasmopara Viticola* is the causal agent of grapevine downy mildew, and is a heterothallic oomycete that overwinters as oospores in leaf litter and soil). The comparison has been done with a commercially available copper product comprising 35% of copper oxychloride ($Cu_2(OH)_3Cl$, used at 0.4 Kg/100 l water, corresponding to 140 g Cu/100 l water), named "Ossiclor 35 WG". As shown in Figures 3 and 4, ABP590 has been tested at 3 different concentrations, i.e. 1 l/100 l, 2 l/100 l, and 4 l/100 l of water, corresponding to 6.4 g Cu/100 l, 12.8 g Cu/100 l, and 25.6 g Cu/100 l, respectively.

The percentages of pest incidence ("% pestinc") has been detected every 15 days (from left to right for each sample in the diagrams of Figure 3 and 4).

It has been unexpectedly observed that an amount of 12.8 g of copper, corresponding to the concentration of 2 l/100 l of water, was enough for achieving an improved level of pathogen control with respect to the known copper product, containing 140 g of copper: this means a copper amount of more than 10.9 times less than the known product. In other words, 9% of the copper content of the known product was satisfactory, especially on bunch.

Additionally, no evidence of phytotoxicity was observed on leaves and bunch.

**Example 6.**

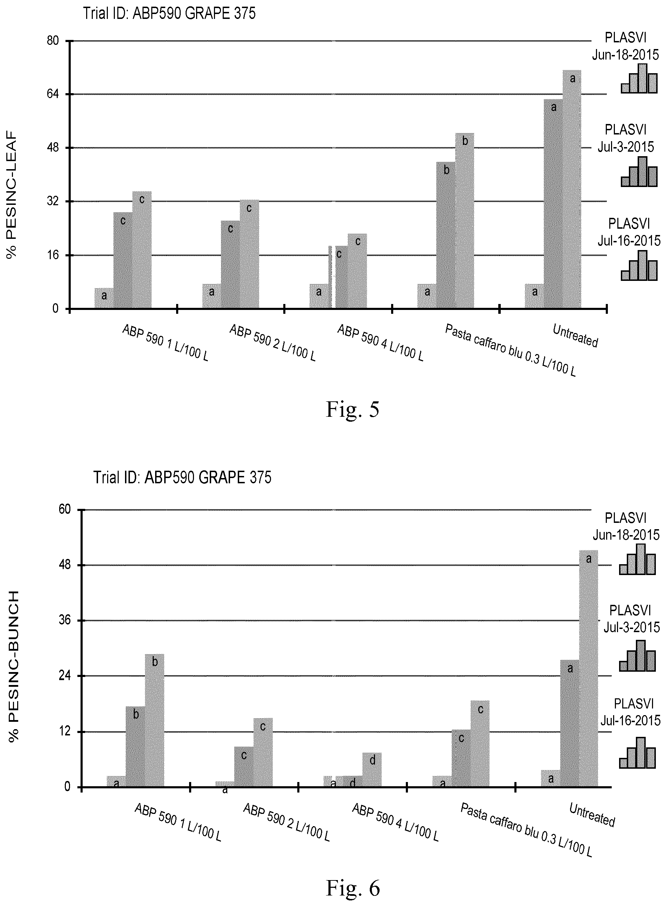

The pest incidence on leaves (Fig. 5) and on bunch (Fig. 6) of ABP590 has been tested in field trials on grape against downy mildew (*Plasmopara Viticola* is the causal agent of grapevine downy mildew, and is a heterothallic oomycete that overwinters as oospores in leaf litter and soil). The comparison has been done with a commercially available copper product comprising 337.5 g/kg of tetra-copper oxychloride (3 $CuO$-$CuCl_2$-3 $H_2O$, used at 0.3 Kg/100 l water, corresponding to 113 g Cu/100 l water), named "Pasta Caffaro Blu".

As shown in Figures 5 and 6, ABP590 has been tested at 3 different concentrations, i.e. 1 l/100 l, 2 l/100 l, and 4 l/100 l of water, corresponding to 6.4 g Cu/100 l, 12.8 g Cu/100 l, and 25.6 g Cu/100 l, respectively.

The percentages of pest incidence ("% pestinc") has been detected every 15 days (from left to right for each sample in the diagrams of Figure 5 and 6).

It has been unexpectedly observed that an amount of 12.8 g of copper, corresponding to the concentration of 2 l/100 l of water, was enough for achieving an improved level of pathogen control with respect to the known copper product, containing 300 g of copper: this means a copper amount of more than 8.8 times less than the known product. In other words, 4.27% of the copper content of the known product was satisfactory, especially on bunch.

Additionally, no evidence of phytotoxicity was observed on leaves and bunch.

**Example 7.**

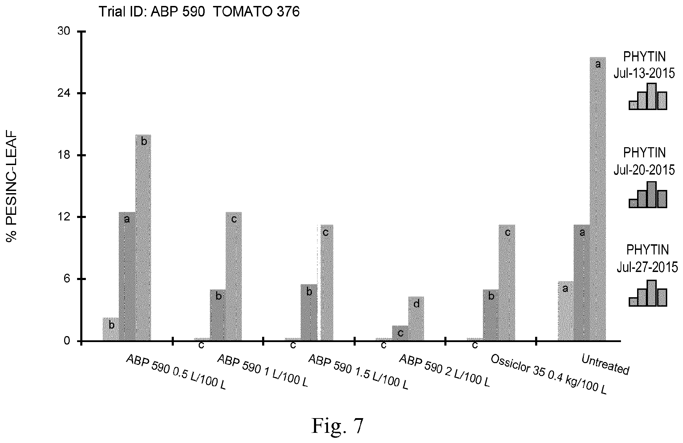

The pest incidence on leaves (Fig. 7) of ABP590 has been tested in field trials on tomatoes against Late blight (*Phytophthora Infestans* an oomycete pathogen). The comparison has been done with a commercially available copper product comprising 35% of copper oxychloride ($Cu_2(OH)_3Cl$, used at 0.4 Kg/100 l water, corresponding to 140 g Cu/100 l water), named "Ossiclor 35 WG".

As shown in Figure 7, ABP590 has been tested at 4 different concentrations, i.e. 0.5 l/100 l, 1 l/100 l, 1.5 l/100 l, and 2 l/100 l of water, corresponding to 3.2 g Cu/100 l, 6.4 g Cu/100 l, 9.6 g Cu/100 l, and 12.8 g Cu/100 l, respectively.

The percentages of pest incidence ("% pestinc") has been detected every 15 days (from left to right for each sample in the diagram of Figure 7).

It has been unexpectedly observed that an amount of 9.6 g of copper, corresponding to the concentration of 1.5 l/100 l of water, was enough for achieving an improved level of pathogen control with respect to the known copper product, containing 140 g of copper: this means a copper amount of more than 14.5 times less than the known product. In other words, 6.85% of the copper content of the known product was satisfactory, especially on bunch.

Additionally, no evidence of phytotoxicity was observed on leaves and bunch.

## Example 8.

In vitro tests on the bacteria *Erwinia amylovora* (Ea), have been performed.

Formulations: ABP 510 (oleic acid formulation), ABP590 (Example 1)
Culture substrate: Ceria 132
For these bacteria, it was made a growth test on the Petri dishes treated with ABP 510 and ABP 590 at the dose rates: 0%, 0.1%, 1%, 2%

After the treatment of Petri dishes with the products at the different doses rates, in the same day, their inoculation was made with 300 $\mu$l of bacterial suspension photometrically controlled at a concentration of about $10^3$ CFU ml$^{-1}$.

The colony counts in each Petri dishes was performed twice: the first 48 hours post inoculation, the second after 5 days.

| E. amylovora | | ABP 510 formulation | | | ABP 590 formulation | | |
|---|---|---|---|---|---|---|---|
| | | A | B | C | A | B | C |
| after | | n°colonies | n°colonies | n°colonies | n°colonies | n°colonies | n°colonies |
| 48 h | 0 | 742 | 762 | 812 | 717 | 716 | 622 |
| | 0.1 | 0 | 0 | 0 | 0 | 0 | 0 |
| | 1 | 0 | 0 | 0 | 0 | 0 | 0 |
| | 2 | 0 | 0 | 0 | 0 | 0 | 0 |
| 5 days | 0 | 1081 | 799 | 951 | 743 | 742 | 649 |
| | 0.1 | 761 | 728 | 795 | 143 | 15 | 29 |
| | 1 | 0 | 0 | 0 | 0 | 0 | 0 |
| | 2 | 0 | 0 | 0 | 0 | 0 | 0 |

It can be observed that the number of colonies is significantly lower for ABP 590, especially after 5 days, than the number of colonies for the oleic acid alone.

## Example 9.

In vitro tests on the pathogen fungi Zymoseptoria tritici (synonym Mycosphaerella graminicola) and Cercospora beticola (Sugarbeet leaf spot disease) have been performed.

Formulations: ABP 510 (oleic acid formulation), ABP590 (Example 1)
Culture substrate: PDA
For these fungi, a mycelial growth test has been made on the Petri dishes treated with ABP 510 and ABP 590 at the dose rates: 0%, 0.5%, 1%, 2%, 4%; 3 replications

*Zymoseptoria tritici*

Mycelial growth test: after the treatment of Petri dishes with the products ABP 510 and ABP 590 at the different doses rates, in the same day, their inoculation was made with 150 $\mu$l of fungal suspension at the concentration of $1\times10^4$ uniformly distributed on all Petri dishes.

The colony counts in each Petri dishes was performed twice: the first 4 days post inoculation, the second after 7 days

First count (4 days after inoculation)

| ABP590 formulation | A | B | C | D | ABP510 formulation | A | B | C | D |
|---|---|---|---|---|---|---|---|---|---|
| Inoculated, not treated | 111 | 92 | 99 | 742 | Inoculated, not treated | 111 | 92 | 99 | 742 |
| 0,5% | 95 | 123 | 87 | - | 0,5% | 124 | 152 | 92 | - |
| 1% | 112 | 112 | 92 | - | 1% | 298 | 243 | 312 | - |
| 2% | 0 | 0 | 0 | - | 2% | 0 | 0 | 0 | - |
| 4% | 0 | 0 | 0 | - | 4% | 0 | 0 | 0 | - |

Second count (7 days after inoculation)

| ABP590 formulation | A | B | C | D | ABP510 formulation | A | B | C | D |
|---|---|---|---|---|---|---|---|---|---|
| Inoculated, not treated | 121 | 96 | 103 | 830 | Inoculated, not treated | 121 | 96 | 103 | 830 |
| 0,5% | 113 | 127 | 95 | - | 0,5% | 187 | 203 | 157 | - |
| 1% | 120 | 124 | 138 | - | 1% | 462 | 464 | 476 | - |
| 2% | 0 | 0 | 0 | - | 2% | 0 | 0 | 0 | - |
| 4% | 0 | 0 | 0 | - | 4% | 0 | 0 | 0 | - |

It can be observed that the number of colonies is significantly lower for ABP 590, even at only 1%, than the number of colonies for the oleic acid alone.

*Cercospora beticola*

Mycelial growth test: after the treatment of Petri dishes with the products ABP 510 and ABP 590 at the different doses rate, in the same day was deposited at the center of each Petri dishes a fungal diskette of 4mm.
The observed data consists on the measurement of the two orthogonal diameters of the mycelia growth which are then mediated. The observations were performed twice: the first 4 days post inoculation, the second after 7 days

First count (4 days after inoculation)

| ABP590 formulation | A | B | C | D | ABP510 formulation | A | B | C | D |
|---|---|---|---|---|---|---|---|---|---|
| Inoculated, not treated | 14 | 13.5 | 13 | - | Inoculated, not treated | 13 | 14 | 14 | - |
| 0,5% | 12 | 4 | 7.5 | - | 0,5% | 3.5 | 3.5 | 3 | - |
| 1% | 10.5 | 11 | 9.5 | - | 1% | 7 | 8 | 8 | - |
| 2% | 8 | 7.5 | 7 | - | 2% | 12 | 12 | 12.5 | - |
| 4% | 2 | 1 | 1 | - | 4% | 11 | 9.5 | 10.5 | - |

Second count (7 days after inoculation)

| ABP590 formulation | A | B | C | D | ABP510 formulation | A | B | C | D |
|---|---|---|---|---|---|---|---|---|---|
| Inoculated, not treated | 33 | 33 | 32 | - | Inoculated, not treated | 28 | 29 | 28.5 | - |
| 0,5% | 20.5 | 16 | 27 | - | 0,5% | 8 | 8 | 9 | - |
| 1% | 24 | 23.5 | Q | - | 1% | 15 | 15 | 14 | - |
| 2% | 19 | 19 | 20 | - | 2% | 29 | 28.5 | 25 | - |
| 4% | 6 | 6 | 6 | - | 4% | 24 | 23 | 25 | - |

It can be observed that the number of colonies is significantly lower for ABP 590, even at only 2%, than the number of colonies for the oleic acid alone.

**Example 10.**

A crop defence composition was prepared according to the present invention.
The procedure of Example 1 was repeated by using copper hydroxide instead of copper salicylate.

**Example 11.**

A crop defence composition was prepared according to the present invention.
The procedure of Example 1 was repeated by using copper oxychloride instead of copper salicylate.

**Example 12.**

The antimicrobial activity of the crop defence compositions prepared in above Examples was evaluated through in vitro test of antimicrobial susceptibility with broth microdilution method (CLSI protocol - Clinical and Laboratory Standards Institute). The Minimum Inhibitory Concentrations (MICs) were determined in multiwell plates. All the tests have been carried out in triplicate, giving very similar inhibition results. Once the MICs were determined, the evaluation of synergy between derivative of $C_{12}$-$C_{24}$ fatty acid and metal compound was performed. The determination of synergy was evaluated by using standard protocol and evaluating in particular the FIC index.
The value of FIC index was determined through the following formula:

$$FIC_{index} = \frac{MIC\ compound\ A\ in\ combination\ with\ B}{MIC\ compound\ A\ alone} + \frac{MIC\ compound\ B\ in\ combination\ with\ A}{MIC\ compound\ B\ alone}$$

where:

A= derivative of $C_{12}$-$C_{24}$ fatty acid
B= metal compound
with
FIC index < 1 : synergistic effect (the activity of two compounds in combination is greater than the sum of their independent activity when studied separately).
FIC index > I : no synergistic effect.

Example 12A.

The MIC of the crop defence composition of Example 1 has been evaluated against B. *cinerea* and then compared to the MIC of copper salicylate and the MIC of potassium oleate alone:

| *B.cinerea* | Potassium oleate | Copper salicylate | Example 1 |
|---|---|---|---|
| MIC (mg/ml) | 3.77 | 0.06 | 0.029-0.023 |
| $FIC_{index}$ = 0.4 | | | |

Example 12B.

The MIC of the crop defence composition of Example 1 has been evaluated against Z. *tritici* and then compared to the MIC of copper salicylate and the MIC of potassium oleate alone:

| Z. *tritici* | Potassium oleate | Copper salicylate | Example 1 |
|---|---|---|---|
| MIC (mg/ml) | 15.06 | 0.235 | 0.117-0.045 |
| $FIC_{index}$ = 0.2 | | | |

Example 12C.

The MIC of the crop defence composition of Example 2 has been evaluated against E. *amylovora* and then compared to the MIC of copper anthranilate and the MIC of potassium oleate alone:

| E. *amylovora* | Potassium oleate | Copper anthranilate | Example 2 |
|---|---|---|---|
| MIC (mg/ml) | 0.0073 | 0.29 | 0.00011-0.024 |
| $FIC_{index}$ = 0.1 | | | |

Example 12D.

The MIC of the crop defence composition of Example 2 has been evaluated against P. *syringae* and then compared to the MIC of copper anthranilate and the MIC of potassium oleate alone:

| P. *syringae* | Potassium oleate | Copper anthranilate | Example 2 |
|---|---|---|---|
| MIC (mg/ml) | 0.03 | 0.59 | 0.00043-0.039 |
| $FIC_{index}$ = 0.67 | | | |

Example 12E.

The MIC of the crop defence composition of Example 10 has been evaluated against E. *amylovora* and then compared to the MIC of copper hydroxide and the MIC of potassium oleate alone:

| E. *amylovora* | Potassium oleate | Copper hydroxide | Example 10 |
|---|---|---|---|
| MIC (mg/ml) | 0.0073 | 0.375 | 0.0001-0.0012 |
| $FIC_{index}$ = 0.017 | | | |

Example 12F.

The MIC of the crop defence composition of Example 11 has been evaluated against P. *infestans* and then compared to the MIC of copper oxychloride and the MIC of potassium oleate alone:

| P. *infestans* | Potassium oleate | Copper oxychloride | Example 11 |
|---|---|---|---|
| MIC (mg/ml) | 0.22 | 3.6 | 0.0069-0.22 |
| $FIC_{index}$ = 0.1 | | | |

The results reported above demonstrate that the crop defence compositions of the invention show an unexpected and significant synergy, as indicated by the values of $FIC_{index}$.

**Claims**

1. A crop defence composition comprising at least a metal compound and a derivative of $C_{16}$-$C_{20}$ fatty acid,

   wherein said metal compound has formula $M_xA_y$, where M is Cu, A is a complexing agent, a counter ion or a combination thereof, x is an integer of 1 to 3 and y is an integer of 1 to 6, and,

   when A is a complexing agent, said complexing agent is thiosalicylic acid, ascorbic acid, alanine, phenylalanine, glycine, isoleucine, leucine, proline, valine, glycolic acid, lactic acid, malic acid, tartaric acid, citric acid, mandelic acid, 2-hydroxy-4-methylthio butanoic acid, anthranilic acid, benzoic acid, salicylic acid, 3,5-dihydroxybenzoic acid, 2,4-dihydroxybenzoic acid, 2,6-dihydroxybenzoic acid, gallic acid, benzenesulphonic acid, naphthalenesulphonic acid, dipicolinic acid, phenylacetic acid, 1-naphthylacetic acid, nicotinic acid, nicotinamide, sulphanilic acid, sulphosalicylic acid, 4-methylsalicilyc acid, 5-methylsalicilyc acid, 4,5-dimethylsalicilyc acid, ethyl salicylate, salicyl anilide, salicylaldehyde, salicylaldoxime, salicylhydroxamic acid, 4-acetamidosalicylic acid, salicyluric acid or a mixture thereof, and
   when A is a counter ion, said counter ion is OH⁻, oxygen, halogen, sulphate, gluconate, oxychloride, or a combination thereof,

   wherein the stoichiometric ratio between the metal M and the derivative of $C_{16}$-$C_{20}$ fatty acid is 1:20 to 1:35, wherein said derivative of $C_{16}$-$C_{20}$ fatty acid is a salt of lithium, sodium, potassium, magnesium, calcium, or a mixture thereof, and
   said derivative of $C_{16}$-$C_{20}$ fatty acid is a mixture comprising at least 70 wt% of a derivative of oleic acid, on the weight of the derivative of $C_{16}$-$C_{20}$ fatty acid.

2. The crop defence composition of claim 1, wherein, when A is a counter ion, said counter ion is OH⁻, halogen, sulphate, gluconate, oxychloride, or a combination thereof, so that the metal compound is a metal hydroxide, metal halide, metal sulphate, metal gluconate, metal oxychloride, or a combination thereof.

3. The crop defence composition of claim 1 or 2, wherein the stoichiometric ratio between the metal M and the derivative of $C_{16}$-$C_{20}$ fatty acid is 1:25 to 1:30.

4. The crop defence composition of any one of claims 1-3, comprising a copper complex and a derivative of $C_{16}$-$C_{20}$ fatty acid.

5. The crop defence composition of any one of claims 1-4, comprising a metal complex selected from the group consisting of copper mandelate, copper salicylate, copper anthranilate, copper 2,6-dihydroxybenzoate, copper benzenesulphonate, and mixtures thereof, and a derivative of $C_{16}$-$C_{20}$ fatty acid, said derivative being a mixture comprising at least 70 wt% of potassium oleate, on the weight of the derivative of $C_{16}$-$C_{20}$ fatty acid.

6. The crop defence composition of any one of claims 1-5, wherein said derivative of $C_{16}$-$C_{20}$ fatty acid is a mixture of derivatives of linoleic acid (C18:2), γ-linolenic acid (C18:3), palmitoleic acid (C16:1), vaccenic acid (C18:1), paullinic acid (C20:1), oleic acid (C18:1), and elaidic acid (Ctrans-18:1).

7. Use of the crop defence composition of any one of claims 1-6 for protecting crop against fungi, oomycetes and bacteria.

8. An agro-chemical product comprising the crop defence composition of any one of claims 1-6, and agro-chemical additives.

9. A method of protecting crop against fungi, oomycetes and bacteria, said method comprising the steps of:

   i) providing a composition of any one of claims 1-6,
   ii) diluting the composition in water to obtain a diluted solution,
   iii) applying the diluted solution to crop.

**Patentansprüche**

1. Pflanzenabwehrzusammensetzung, umfassend mindestens eine Metallverbindung und ein Derivat von $C_{16}$-$C_{20}$-Fettsäure,

   wobei die Metallverbindung eine Formel $M_xA_y$ aufweist, wobei M Cu ist, A ein Komplexbildner, ein Gegenion oder eine Kombination davon ist, x eine ganze Zahl von 1 bis 3 ist und y eine ganze Zahl von l bis 6 ist und,

   wenn A ein Komplexbildner ist, der Komplexbildner Thiosalicylsäure, Ascorbinsäure, Alanin, Phenylalanin, Glycin, Isoleucin, Leucin, Prolin, Valin, Glycolsäure, Milchsäure, Äpfelsäure, Weinsäure, Citronensäure, Mandelsäure, 2-Hydroxy-4-methylthio-butansäure, Anthranilsäure, Benzoesäure, Salicylsäure, 3,5-Dihydroxybenzoesäure, 2,4-Dihydroxybenzoesäure, 2,6-Dihydroxybenzoesäure, Gallussäure, Benzolsulfonsäure, Naphthalinsulfonsäure, Dipicolinsäure, Phenylessigsäure, 1-Naphthylessigsäure, Nicotinsäure, Nicotinamid, Sulfanilsäure, Sulfosalicylsäure, 4-Methylsalicylsäure, 5-Methylsalicylsäure, 4,5-Dimethylsalicylsäure, Ethylsalicylat, Salicylanilid, Salicylaldehyd, Salicylaldoxim, Salicylhydroxamsäure, 4-Acetamidosalicylsäure, Salicylharnsäure oder ein Gemisch davon ist, und
   wenn A ein Gegenion ist, das Gegenion $OH^-$, Sauerstoff, Halogen, Sulfat, Gluconat, Oxychlorid oder eine Kombination davon ist,

   wobei das stöchiometrische Verhältnis zwischen dem Metall M und dem Derivat von $C_{16}$-$C_{20}$-Fettsäure 1:20 bis 1:35 beträgt,
   wobei das Derivat von $C_{16}$-$C_{20}$-Fettsäure ein Salz von Lithium, Natrium, Kalium, Magnesium, Calcium oder ein Gemisch davon ist und
   das Derivat von $C_{16}$-$C_{20}$-Fettsäure ein Gemisch ist, das mindestens 70 Gew.-% eines Derivats von Ölsäure bezogen auf das Gewicht des Derivats von $C_{16}$-$C_{20}$-Fettsäure umfasst.

2. Pflanzenabwehrzusammensetzung nach Anspruch 1, wobei, wenn A ein Gegenion ist, das Gegenion $OH^-$, Halogen, Sulfat, Gluconat, Oxychlorid oder eine Kombination davon ist, sodass die Metallverbindung ein Metallhydroxid, Metallhalogenid, Metallsulfat, Metallgluconat, Metalloxychlorid oder eine Kombination davon ist.

3. Pflanzenabwehrzusammensetzung nach Anspruch l oder 2, wobei das stöchiometrische Verhältnis zwischen dem Metall M und dem Derivat von $C_{16}$-$C_{20}$-Fettsäure 1:25 bis 1:30 beträgt.

4. Pflanzenabwehrzusammensetzung nach einem der Ansprüche 1-3, umfassend einen Kupferkomplex und ein Derivat von $C_{16}$-$C_{20}$-Fettsäure.

5. Pflanzenabwehrzusammensetzung nach einem der Ansprüche 1-4, umfassend einen Metallkomplex, ausgewählt aus der Gruppe bestehend aus Kupfermandelat, Kupfersalicylat, Kupferanthranilat, Kupfer-2,6-dihydroxybenzoat, Kupferbenzolsulfonat und Gemischen davon, und ein Derivat von $C_{16}$-$C_{20}$-Fettsäure, wobei das Derivat ein Gemisch ist, das mindestens 70 Gew.-% Kaliumoleat bezogen auf das Gewicht des Derivats von $C_{16}$-$C_{20}$-Fettsäure umfasst.

6. Pflanzenabwehrzusammensetzung nach einem der Ansprüche 1-5, wobei das Derivat von $C_{16}$-$C_{20}$-Fettsäure ein Gemisch von Derivaten von Linolsäure (C18:2), $\gamma$-Linolensäure (C18:3), Palmitoleinsäure (C16:1), Vaccensäure (C18:1), Paullinsäure (C20:1), Ölsäure (C18:1) und Elaidinsäure (Ctrans-18:1) ist.

7. Verwendung der Pflanzenabwehrzusammensetzung nach einem der Ansprüche 1-6 zum Schützen von Pflanzen vor Pilzen, Oomyceten und Bakterien.

8. Agrochemisches Produkt, umfassend die Pflanzenabwehrzusammensetzung nach einem der Ansprüche 1-6 und agrochemische Zusatzstoffe.

9. Verfahren zum Schützen von Pflanzen vor Pilzen, Oomyceten und Bakterien, wobei das Verfahren die folgenden Schritte umfasst:

   i) Bereitstellen einer Zusammensetzung nach einem der Ansprüche 1-6,
   ii) Verdünnen der Zusammensetzung in Wasser, um eine verdünnte Lösung zu erlangen,
   iii) Auftragen der verdünnten Lösung auf Pflanzen.

**Revendications**

1.  Composition de protection des cultures comprenant au moins un composé métallique et un dérivé d'acide gras en $C_{16}$-$C_{20}$,

    dans laquelle ledit composé métallique présente la formule $M_xA_y$, où M est Cu, A est un agent complexant, un contre-ion ou une combinaison de ceux-ci, x est un nombre entier de 1 à 3 et y est un nombre entier de 1 à 6, et,

    lorsque A est un agent complexant, ledit agent complexant est de l'acide thiosalicylique, de l'acide ascorbique, de l'alanine, de la phénylalanine, de la glycine, de l'isoleucine, de la leucine, de la proline, de la valine, de l'acide glycolique, de l'acide lactique, de l'acide malique, de l'acide tartrique, de l'acide citrique, de l'acide mandélique, de l'acide butanoïque 2-hydroxy-4-méthylthio, de l'acide anthranilique, de l'acide benzoïque, de l'acide salicylique, de l'acide 3,5-dihydroxybenzoïque, de l'acide 2,4-dihydroxybenzoïque, de l'acide 2,6-dihydroxybenzoïque, de l'acide gallique, de l'acide benzènesulfonique, de l'acide naphtalènesulfonique, de l'acide dipicolinique, de l'acide phénylacétique, de l'acide 1-naphtylacétique, de l'acide nicotinique, de la nicotinamide, de l'acide sulfanilique, de l'acide sulfosalicylique, de l'acide 4-méthylsalicilyque, de l'acide 5-méthylsalicilyque, de l'acide 4,5-diméthylsalicilyque, du salicylate d'éthyle, de l'anilide de salicyle, du salicylaldéhyde, du salicylaldoxime, salicylaldoximeacide salicylhydroxamique, de l'acide 4-acétamidosalicylique, de l'acide salicylurique ou un mélange de ceux-ci, et

    lorsque A est un contre-ion, ledit contre-ion est OH$^-$, de l'oxygène, un halogène, un sulfate, un gluconate, un oxychlorure, ou une combinaison de ceux-ci,

    dans laquelle le rapport stœchiométrique entre le métal M et le dérivé d'acide gras en $C_{16}$-$C_{20}$ est de 1:20 à 1:35,

    dans laquelle ledit dérivé d'acide gras en $C_{16}$-$C_{20}$ est un sel de lithium, de sodium, de potassium, de magnésium, de calcium ou un mélange de ceux-ci, et

    ledit dérivé d'acide gras en $C_{16}$-$C_{20}$ est un mélange comprenant au moins 70 % en poids d'un dérivé d'acide oléique, sur le poids du dérivé d'acide gras en $C_{16}$-$C_{20}$.

2.  Composition de protection des cultures de la revendication 1, dans laquelle, lorsque A est un contre-ion, ledit contre-ion est OH$^-$, un halogène, un sulfate, un gluconate, un oxychlorure, ou une combinaison de ceux-ci, afin que le composé métallique soit un hydroxyde métallique, un halogénure métallique, un sulfate métallique, un gluconate métallique, un oxychlorure métallique, ou une combinaison de ceux-ci.

3.  Composition de protection des cultures de la revendication 1 ou 2, dans laquelle le rapport stœchiométrique entre le métal M et le dérivé d'acide gras en $C_{16}$-$C_{20}$ est de 1:25 à 1:30.

4.  Composition de protection des cultures de l'une quelconque des revendications 1 à 3, comprenant un complexe de cuivre et un dérivé d'acide gras en $C_{16}$-$C_{20}$.

5.  Composition de protection des cultures de l'une quelconque des revendications 1 à 4, comprenant un complexe métallique choisi dans le groupe constitué par le mandélate de cuivre, le salicylate de cuivre, l'anthranilate de cuivre, le 2,6-dihydroxybenzoate de cuivre, le benzènesulfonate de cuivre et des mélanges de ceux-ci, et un dérivé d'acide gras en $C_{16}$-$C_{20}$, ledit dérivé étant un mélange comprenant au moins 70 % en poids d'oléate de potassium, sur le poids du dérivé d'acide gras en $C_{16}$-$C_{20}$.

6.  Composition de protection des cultures de l'une quelconque des revendications 1 à 5, dans laquelle ledit dérivé d'acide gras en $C_{16}$-$C_{20}$ est un mélange de dérivés d'acide linoléique (C18:2), d'acide γ-linolénique (C18:3), d'acide palmitoléique (C16:1), d'acide vaccénique (C18:1), d'acide paullinique (C20:1), d'acide oléique (C18:1) et d'acide élaïdique (Ctrans-18:1).

7.  Utilisation de la composition de protection des cultures de l'une quelconque des revendications 1 à 6 pour protéger des cultures contre des champignons, des oomycètes et des bactéries.

8.  Produit agrochimique comprenant la composition de protection des cultures de l'une quelconque des revendications 1 à 6, et des additifs agrochimiques.

9.  Procédé de protection des cultures contre des champignons, des oomycètes et des bactéries, ledit procédé comprenant les étapes de :

i) fourniture d'une composition de l'une quelconque des revendications 1 à 6,
ii) dilution de la composition dans de l'eau pour obtenir une solution diluée,
iii) application de la solution diluée à des cultures.

Fig. 1

Fig. 2

Trial ID: ABP590 GRAPE 374

Fig. 3

Trial ID: ABP590 GRAPE 374

Fig. 4

Trial ID: ABP590 GRAPE 375

Fig. 5

Trial ID: ABP590 GRAPE 375

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9113552 A

### Non-patent literature cited in the description

- *EFSA Journal*, 2013, vol. 11 (6), 3235
- **CHIBUIKE G. U. et al.** Heavy Metal Polluted Soils: Effect on Plants and Bioremediation Methods. *Applied and Environmental Soil Science*, 2014, vol. 2014
- **W. F. WHITMORE et al.** Metallic Soaps-Their Uses, Preparation, and Properties. *Industrial And Engineering Chemistry*, June 1930, vol. 22 (6)
- **R. J. SHENNAN et al.** Anthranilic acid and its use in the determination of zinc, cadmium, cobalt, nickel and copper. *Analyst*, 1936, vol. 61, 395-400

- **D. J. C. GOMES et al.** Synthesis, characterization and thermal study of solid mandelate of some bivalent transition metal ions in CO2 and N2 atmospheres. *Journal of Thermal Analysis and Calorimetry,*, January 2013, vol. 111 (1), 57-62
- **D. R. SATRIANA**. Preparation of analytically pure monobasic copper salicylate. *U. S. Nat. Tech. Inform. Serv., AD Rep.*, 1971 (732352), 27